# EUROPEAN PATENT APPLICATION

(11) **EP 4 773 722 A1**
(43) Date of publication of application: **08.07.2026**
(21) Application number: 24865907.0
(22) Date of filing: 13.09.2024
(51) Int. Cl.: H04W 76/15, H04W 74/0816, H04W 84/12

(54) **APPARATUS AND METHOD FOR FAST ERROR RECOVERY IN WIRELESS LAN SYSTEM**

(30) Priority: 13.09.2023 KR 20230121756
(71) Applicant: Hyundai Motor Company, Seoul 06797 (KR); Kia Corporation, Seoul 06797 (KR); KOREA NATIONAL UNIVERSITY OF TRANSPORTATION INDUSTRY-ACADEMIC COOPERATION FOUNDATION, Chungju-si, Chungcheongbuk-do 27469 (KR)
(72) Inventor: KIM, Yong Ho, Incheon 22003 (KR); AHN, Woo Jin, Anyang-si Gyeonggi-do 14038 (KR); MOON, Ju Seong, Osan-si Gyeonggi-do 18101 (KR); LEE, Gwang Ho, Hwaseong-si Gyeonggi-do 18416 (KR)
(74) Representative: Isarpatent
(86) International application number: PCT/KR2024/014011
(87) International publication number: WO 2025/058468

(57) **Abstract**

A method for operating an access point (AP) in a wireless LAN system for rapid error recovery may comprise receiving a plurality of frames from a station (STA), detecting an error in at least one of the plurality of frames, transmitting a retransmission request based on a frame in which the error has been detected and receiving a retransmission frame based on the retransmission request. The retransmission frame includes the frame in which the error has been detected, and the retransmission frame is received on a link on which the retransmission request was transmitted.

## Description

### Technical Field

The present invention relates to a wireless local area network (WLAN) system, and more particularly, to an apparatus and method for rapid error recovery in a wireless LAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

Standards for wireless LAN technology are primarily being developed to the IEEE 802.11 standard by the Institute of Electrical and Electronics Engineers (IEEE). As the aforementioned wireless LAN technology has developed and become widespread, applications utilizing it have diversified, creating a demand for wireless LAN technology that supports higher reliability.

As applications requiring higher reliability emerge, the IEEE 802.11bn standard, which is an Ultra High Reliability (UHR) wireless LAN technology, is being developed in single Basic Service Set (BSS) and/or redundant BSS environments. The goals of the IEEE 802.11bn standard are to support increased data transmission rates, improved latency performance, and lower data error rates. Furthermore, the IEEE 802.1 1bn standard can support low-power operation and peer-to-peer communication.

Improvements may be needed in a method of recovering from errors occurred in frames in wireless LANs. When combining and transmitting multiple frames, some frames with errors may be recovered after all frames have been transmitted and an acknowledgment of the errors has been received. Because acknowledgments for frames with errors may only be received after all frames have been transmitted, errors may not be recovered quickly. In other words, the requirements for low-latency communication may not be met.

Meanwhile, the technologies that are described in the Background section are written to improve the understanding of the background of the present disclosure and may include content that is not already known to those of ordinary skill in the art to which the present disclosure belongs.

### Disclosure

### Technical Problem

The present disclosure provides a method and apparatus for detecting and reporting errors in frames received by an access point (AP) in a wireless LAN system.

The present disclosure provides a method and apparatus for enabling a station (STA) to quickly recover frames in which errors have been detected in a wireless LAN system.

The present disclosure provides a method and apparatus for enabling an AP and STA using a non-simultaneous transmit/receive (NSTR) link pair to report and recover from errors in frames using at least one link in a wireless LAN system.

The present disclosure also provides a method and apparatus for transmitting a frame requesting retransmission of a frame in which an error has been detected in a wireless LAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

A method for operating an access point (AP) in a wireless LAN system may comprise receiving a plurality of frames from a station (STA), detecting an error in at least one of the plurality of frames, transmitting a retransmission request based on a frame in which the error has been detected and receiving a retransmission frame based on the retransmission request. The retransmission frame includes the frame in which the error has been detected, and the retransmission frame is received on a link on which the retransmission request was transmitted.

A method for operating a STA (station) in a wireless LAN system may comprise transmitting a plurality of frames to an access point (AP), receiving a retransmission request based on a frame in which an error has been detected among the plurality of frames, and transmitting a retransmission frame based on the retransmission request. The retransmission frame includes the frame in which the error has been detected, and the retransmission frame is transmitted on a link on which the retransmission request was received.

An access point (AP) in a wireless LAN system may comprise a transceiver and a processor connected to the transceiver. The processor is configured to receive a plurality of frames from a station (STA), detect an error in at least one of the plurality of frames, transmit a retransmission request based on a frame in which the error has been detected and receive a retransmission frame based on the retransmission request. The retransmission frame includes the frame in which the error has been detected, and the retransmission frame is received on a link on which the retransmission request was transmitted.

A station (STA) in a wireless LAN system may comprise a transceiver and a processor connected to the transceiver. The processor is configured to transmit a plurality of frames to an access point (AP), receive a retransmission request based on a frame in which an error has been detected among the plurality of frames and transmit a retransmission frame based on the retransmission request. The retransmission frame includes the frame in which the error has been detected, and the retransmission frame is transmitted on a link on which the retransmission request was received.

### Advantageous Effects

According to the present disclosure, a feedback frame including time information capable of identifying a frame in which an error has been detected may be transmitted in a wireless LAN system.

According to the present disclosure, an MPDU including information about a previous MPDU and a next MPDU may be transmitted.

According to the present disclosure, an AP can identify a frame in which an error has been detected and transmit a feedback frame.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 is a block diagram illustrating a first embodiment of a communication node constituting a WLAN system.
FIG. 2 is a flowchart illustrating an embodiment of a negotiation procedure for multi-link operation in a wireless LAN system.
FIG. 3 illustrates a first embodiment of a rapid error recovery method.
FIG. 4 illustrates a second embodiment of a rapid error recovery method.
FIG. 5 illustrates a third embodiment of a rapid error recovery method.
FIG. 6 illustrates a fourth embodiment of a rapid error recovery method.
FIG. 7 illustrates a fifth embodiment of a rapid error recovery method.
FIG. 8 illustrates a flowchart of an error recovery procedure according to one embodiment of the present disclosure.
FIG. 9 illustrates a flowchart of an error recovery procedure according to one embodiment of the present disclosure.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this invention pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, preferred embodiments of the present invention will be described in more detail. In order to facilitate an overall understanding in describing the present invention, identical reference numerals are used for identical components in the drawings, and redundant descriptions of identical components are omitted.

Below, a wireless communication system to which embodiments of the present invention are applied will be described. The wireless communication system to which embodiments of the present invention are applied is not limited to the description below, and embodiments of the present invention can be applied to various wireless communication systems. The wireless communication system may be referred to as a "wireless communication network."

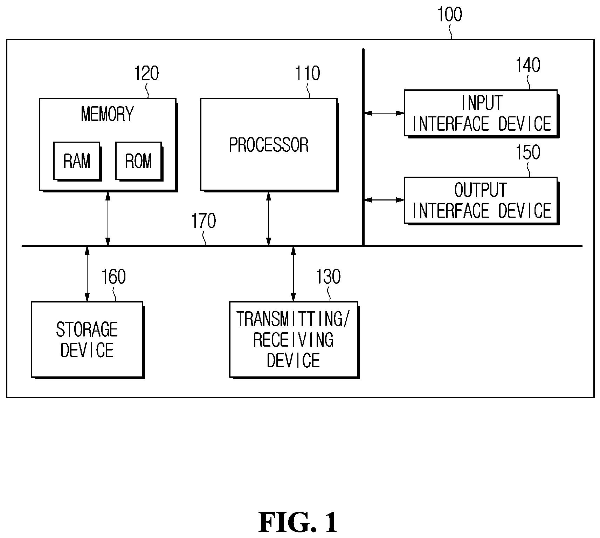

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

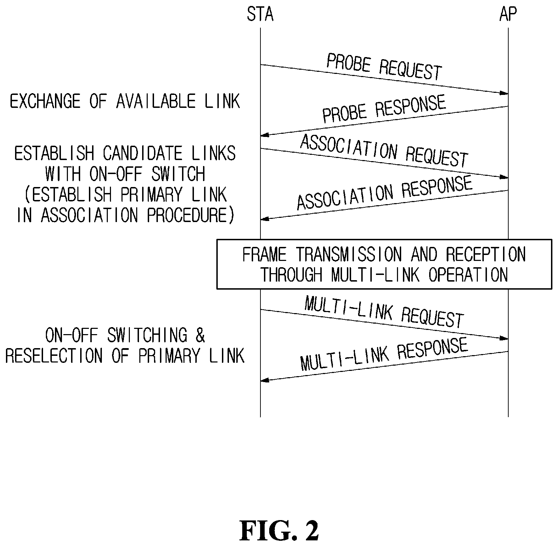

FIG. 2 is a flowchart illustrating an embodiment of a negotiation procedure for multi-link operation in a wireless LAN system.

Referring to FIG. 2, a connection procedure between a station (STA) and an access point (AP) in an infrastructure basic service set (BSS) may include a probe step of the access point, an authentication step between the station and the detected access point, and an association step between the station and the authenticated access point.

In the probe step, the station may detect one or more access points using either a passive scanning method or an active scanning method. When the passive scanning method is used, the station may detect one or more access points by overhearing beacon frames transmitted by one or more access points. When the active scanning method is used, the station may detect one or more access points by transmitting a probe request frame and receiving a probe response frame, which is a response to the probe request frame, from one or more access points.

If one or more access points are detected, the station may perform an authentication step with the detected access point(s). In this case, the station may perform the authentication step with multiple access points. Authentication algorithms according to the IEEE 802.11 standard may be classified into an open system algorithm that exchanges two authentication frames and a shared key algorithm that exchanges four authentication frames.

The station may transmit an authentication request frame based on an authentication algorithm according to the IEEE 802.11 standard, and complete authentication with the access point by receiving an authentication response frame, which is a response to the authentication request frame, from the access point.

When authentication with the access point is completed, the station may perform an association step with the access points. In this case, the station may select one of the access points with which it has performed the authentication step, and perform an association step with the selected access point. That is, the station may transmit an association request frame to the selected access point, and complete the association with the selected access point by receiving an association response frame, which is a response to the association request frame, from the selected access point.

Meanwhile, multi-link operation may be supported in a wireless LAN system. An MLD may include one or more STAs associated with the MLD. The MLD may be a logical entity. The MLD may be classified into an AP MLD and a non-AP MLD. Each STA associated with an AP MLD may be an AP, and each STA associated with a non-AP MLD may be a non-AP STA. To configure multiple links, a multi-link discovery procedure, a multi-link setup procedure, etc. may be performed. The multi-link discovery procedure may be performed during the probe step between the station and the access point. In this case, a multi-link information element (ML IE) may be included in a beacon frame, a probe request frame, and/or a probe response frame.

For example, in order to perform multi-link operation, information indicating whether multi-link operation is available and information about available links may be exchanged between the access point (e.g., the AP associated with an MLD) and the station (e.g., the non-AP STA associated with the MLD) in the probe step. In a negotiation procedure for multi-link operation (e.g., a multi-link setup procedure), the access point and/or the station may transmit information about links to be used for multi-link operation. The negotiation procedure for multi-link operation may be performed during an association procedure (e.g., an association step) between the station and the access point, and information element(s) required for multi-link operation may be set or changed by an action frame during the negotiation procedure.

Additionally, during the connection procedure between the station and the access point (e.g., the association step), available link(s) of the access point may be configured, and each link may be assigned an identifier (ID). Thereafter, during the negotiation and/or change procedures for multi-link operation, information indicating whether each link is active may be transmitted, and this information may be expressed using a link ID.

Information indicating whether multi-link operation is available may be transmitted and received in a capability information element (e.g., an extremely high throughput (EHT) capability information element) exchange procedure between the station and the access point. The capability information element may include information on a supporting band, information on a supporting link (e.g., an ID and/or number of supporting links), information on links capable of STR operation (e.g., band information of links, spacing information of links), etc. In addition, the capability information element may include information individually indicating links capable of STR operation.

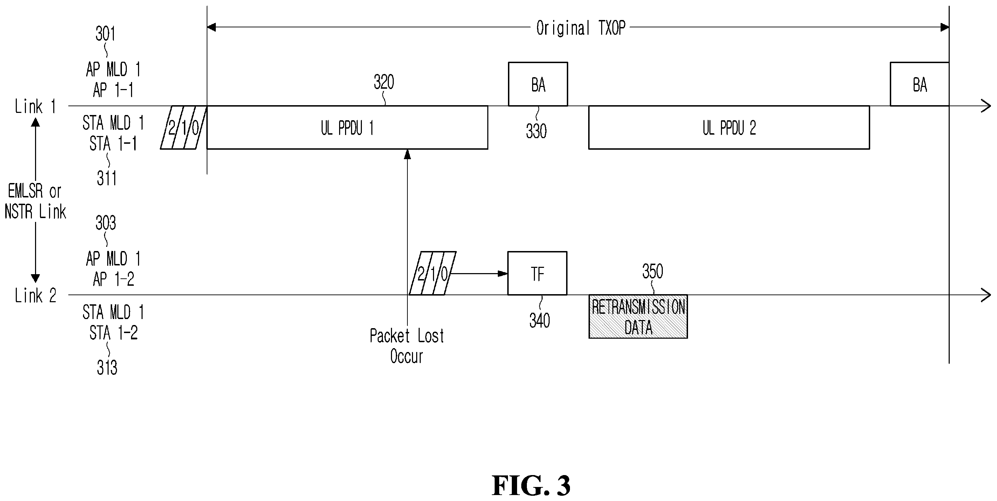

FIG. 3 illustrates a first embodiment of a rapid error recovery method.

Referring to FIG. 3, AP 1-1 301 and AP 1-2 303 affiliated with AP MLD 1 may operate, and AP 1-1 301 may operate in a first link, and AP 1-2 303 may operate in a second link. STA 1-1 311 and STA 1-2 313 affiliated with STA MLD 1 may operate, and STA 1-1 311 may operate in a first link, and STA 1-2 313 may operate in a second link. The first link and the second link may be a NonSimultaneous Transmit and Receive (NSTR) link pair. STA 1-1 311 may perform a channel access operation (e.g., an EDCA backoff operation) to acquire a TXOP. Within the TXOP acquired by STA 1-1 311, STA 1-1 311 may transmit at least one frame (e.g., Physical Layer Protocol Data Unit (PPDU), Medium Access Control Layer Protocol Data Unit (MPDU), Aggregated MPDU (A-MPDU)). The PPDU transmitted by STA 1-1 311 may include at least one MPDU or A-MPDU.

STA 1-1 311 may transmit UL PPDU 1 320 as a first frame of TXOP. STA MLD 1 may establish a BA session with AP MLD 1 for each TID. That is, the BA session may be established for each MLD. For example, STA 1-1 311 may establish the BA session corresponding to a specific TID with AP 1-1 301 on the first link, and STA 1-1 311 of STA MLD 1 may act as an originator and AP 1-1 301 of AP MLD 1 may act as a recipient. AP 1-1 301 may record the SN of the MPDU or/and MSDU included in the received UL PPDU 1 320 in a scoreboard and store the received frame in a reorder buffer. If AP 1-1 301 does not correctly receive UL PPDU 1 320, a specific SN may be missing in the scoreboard, and the MSDU corresponding to the next SN of the missing SN may not be forwarded to the upper layer. AP 1-1 301 may request recovery of the missing MPDU or/and MSDU from STA 1-1 311. Recovery of MPDU or/and MSDU may have a priority. AP 1-1 301 may request STA 1-1 311 to recover the missing MPDU or/and MSDU with priority. For example, AP 1-1 301 may request recovery of the missing MPDU or/and MSDU based on the priority of TID. Here, TID is mapped to AC, and in this case, the priority of TID is the priority of AC. Alternatively, AP 1-1 301 may request that missing MPDUs or/and MSDUs be recovered based on the priority of the frame according to Delay Bound information.

When identifying the missing MPDU or/and MSDU, the AP MLD may perform a channel access operation (e.g., an EDCA backoff operation) on a link (e.g., a second link) other than the first link on which UL PPDU 1 320 is being transmitted. The channel access operation may include a backoff operation. According to one embodiment of the present disclosure, initiating the backoff operation may be initiating a channel access operation. That is, the backoff operation may be initiated on the second link as soon as an error is identified on the first link. Alternatively, when frame transmission is initiated on the first link, a backoff operation may be initiated on the second link. When the backoff operation is completed on the second link (e.g., when the backoff counter reaches 0), and STA 1-1 311 has finished transmission on the first link and is in a receiving state, i.e., when reception is also possible on the second link, AP 1-2 303 may transmit to STA 1-2 313 a frame (e.g., a Trigger Frame (TF), 340) indicating transmission of a frame in which an error has occurred among the frames transmitted by STA 1-1 311. The frame 340 indicating transmission of the frame in which an error has occurred may be transmitted at the same time as a BA (BlockAck) frame 330 transmitted on the first link, and may indicate resources (e.g., uplink transmission time) that may transmit a frame in which an error has occurred, and may include an AID (Association ID), which is an identifier that the AP MLD assigns to each connected STA MLD as a terminal identifier. The frame indicating transmission of a frame in which an error has occurred may indicate the AID of STA MLD1 1. The AID of STA MLD 1 may be the same as those of STA 1-1 311 and STA 1-2 313. At the time when the backoff operation is completed, if STA 1-1 311 is transmitting on the first link, AP 1-2 303 may keep the backoff counter at 0 and wait without transmitting a frame. AP 1-2 303 may transmit a frame 340 indicating transmission of a frame in which an error has occurred when it is expected that STA 1-1 311 has terminated transmission on the first link and is waiting to receive. A packet (e.g., MSDU) to be transmitted to another STA other than STA 1-2 313 affiliated with STA MLD 1 may occur in the queue of the EDCAF associated with the AC (Access Category) for which the backoff counter of AP 1-2 303 is being maintained at 0. AP 1-2 303 of AP MLD 1 may consider the buffer of the AC that is keeping the backoff counter at 0 as empty until the transmission of the frame in which an error has occurred is terminated, and may delay the transmission of the occurred packet Alternatively, even if the backoff operation is terminated when 'STA 1-1 311 is transmitting on the first link', a new backoff operation may be performed again until STA 1-1 311 terminates the transmission on the first link. AP 1-1 301 may transmit a BA frame 330 after a certain period of time (e.g., SIFS time) from the transmission end time of UL PPDU 1 320 transmitted by STA 1-1 311. The AP MLD may transmit a frame indicating transmission of the frame in which an error has occurred on the second link rather than the first link on which the BA frame 330 is transmitted, at the same time as transmitting the BA frame 330. Alternatively, the transmission start time of the BA frame 330 of AP 1-1 301 and AP 1-2 303 of AP MLD 1 and the transmission start time of the frame 340 indicating transmission of the frame in which the error has occurred may be different. The frame 340 indicating transmission of the frame in which the error has occurred may be padded to align the transmission end time with the BA frame 330 in order to transmit the frame in which the error has occurred simultaneously with transmission of the first link, or the transmission start time may be adjusted so that the transmission end time of the frame 340 indicating transmission of the frame in which the error has occurred coincides with the end time of the BA frame 330 transmitted by STA 1-1 311 on the first link. The BA frame 330 may be padded to align the transmission end time with the frame 340 indicating transmission of a frame in which an error occurred for simultaneous transmission of subsequent frames. Padding includes a padding field and a padding bit. Padding may be performed in the MAC frame or in the PHY PPDU. The frame 340 indicating transmission of the frame in which the error has occurred may include TID information of the MPDU or/and MSDU that has not been correctly received in various forms such as fields, subfields, and indication bits. STA MLD 1 may place the MPDU or/and MSDU that requires rapid recovery at the foremost side of the UL PPDU 2 by referring to parameters (e.g., information of the MPDU or/and MSDU that has not been correctly received) included in the received BA frame 330 and the frame 340 indicating transmission of the frame in which the error has occurred and transmit them first. Alternatively, STA MLD 1 may transmit the MPDU or/and MSDU that requires rapid recovery in the form of a separate UL PPDU on the second link other than the first link on which UL PPDU 1 320 is transmitted. Alternatively, STA MLD 1 may transmit the MPDU or/and MSDU requiring rapid recovery on both the first link and the second link.

The PPDUs transmitted by AP MLD 1 on the first and second links may be self-decodable. To correct errors in the PPDUs, a channel coding combining method (e.g., Chase combining) may be used to attempt decoding by combining an original packet in which an error has occurred and a retransmitted packet. In this embodiment, the channel coding combining method is referred to as the 'CC combining method'. When the decoding of the PPDU received on the first link fails (e.g., when an error occurs in the MPDU included in the PPDU received on the first link or when error correction of the PPDU received on the first link fails), STA MLD 1 combines the PPDU received on the first link with the PPDU received on the second link and then performs decoding to decode a correct frame. Combining of the PPDUs is performed after the PPDUs are demodulated in the physical layers of STA 1 and STA 2 of STA MLD 1. Combining of PPDUs and decoding of the combined PPDU may be performed in one of the physical layers of STA 1 or STA 2. Alternatively, combining of PPDUs and decoding of the combined PPDU may be performed by a separate entity existing in STA MLD 1. When the CC combining method is used, the PPDU transmitted by AP MLD 1 on the first link and the PPDU transmitted on the second link may use the same redundancy (e.g., redundancy bits, channel coding bits). For example, the PPDU transmitted on the first link and the PPDU transmitted on the second link may use the same channel coding and may be the same PPDU having the same codeword (e.g., bits including data bits and redundancy bits for error correction). Even when the channel coding combining method is used and STA MLD 1 combines the PPDU received on the first link and the PPDU received on the second link, decoding may fail. STA MLD 1 may request additional retransmission PPDUs (e.g., PPDU N) from AP MLD 1, and the PPDUs may be combined. STA MLD 1 may perform frame decoding based on the combined PPDU. In a different method from the channel coding combining method, a channel coding combining method (e.g., incremental redundancy) may be used, which gradually increases the channel coding gain for each retransmission and performs retransmission. In the present disclosure, the channel coding combining method is referred to as the 'IR combining method.' When the IR combining method is used, STA MLD 1 may decode a correct PPDU using the PPDU received on the second link if the decoding of the PPDU received on the first link fails. The codewords of the PPDUs transmitted by AP MLD 1 on the first link and the PPDUs transmitted on the second link include the same data bits, but have different redundancies (e.g., redundancy bits, channel coding bits). That is, the two PPDUs are PPDUs with different codewords. STA MLD 1 may combine the PPDU received on the first link and the PPDU received on the second link, and obtain additional redundancy for correcting errors in the PPDUs. Since the PPDU received on the first link and the PPDU received on the second link have different redundancies, the code rate of the combined PPDU is lowered. As the code rate decreases, the redundancy bits for the data bits increase, and errors may be recovered well. For example, if the code rate of the PPDU received on the first link is 3/4 and the code rate of the PPDU received on the second link is 3/4, the code rate of the PPDUs combined from the PPDUs received on the first and second links may be 3/5. If three PPDUs with code rates of 3/4 are combined, the code rate of the combined PPDU may be 1/2. STA MLD 1 may correct and decode errors in the PPDU using the combined PPDU.

In the two channel coding combining methods (CC combining and IR combining), the transmitted PPDUs may be self-decodable. Therefore, PPDU combining may not be used if the retransmitted PPDU (e.g., PPDU transmitted on the secondary link) is self-decodable without errors.

In two channel coding combining methods (CC combining and IR combining), decoding errors may be detected on an MPDU basis. For example, an error may occur in the second MPDU included in the PPDU transmitted by AP MLD 1 on the first link, while no errors may occur in the remaining MPDUs. Instead of retransmitting the entire PPDU on the second link for channel coding combining, AP MLD 1 may transmit a PPDU including only the second MPDU. STA MLD 1 may combine a portion of the PPDU received on the first link (e.g., a portion of the PPDU including the second MPDU) with the PPDU received on the second link, and decode the combined PPDU. Based on the combined PPDU, STA MLD 1 may correctly receive the second MPDU in which the error has occurred.

AP 1-1 301 may transmit a BA frame after a certain period of time (e.g., SIFS time) from the transmission end time of UL PPDU 2. When the AP MLD receives the recovered MPDUs or/and MSDUs, it may reorder the MPDUs or/and MSDUs waiting in the reorder buffer and forward them to the upper layer.

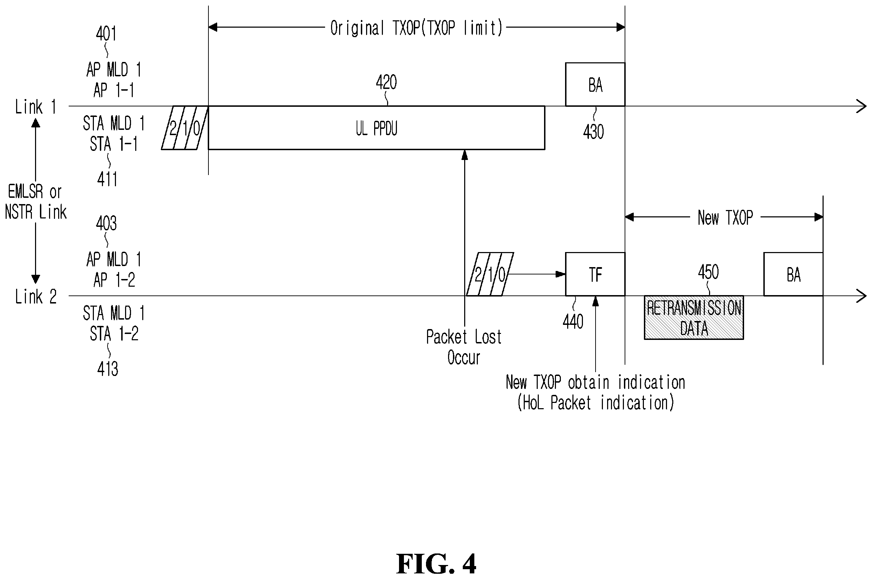

FIG. 4 illustrates a second embodiment of a rapid error recovery method.

Referring to FIG. 4, AP 1-1 401 and AP 1-2 403 affiliated with AP MLD 1 may operate, and AP 1-1 401 may operate in a first link, and AP 1-2 403 may operate in a second link. STA 1-1 411 and STA 1-2 413 affiliated with STA MLD 1 may operate, and STA 1-1 411 may operate in a first link, and STA 1-2 413 may operate in a second link. The first link and the second link may be a Non-Simultaneous Transmit and Receive (NSTR) link pair. STA 1-1 411 may perform a channel access operation (e.g., EDCA backoff operation) to acquire a TXOP. Within the TXOP acquired by STA 1-1 411, STA 1-1 411 may transmit at least one frame (e.g., Physical Layer Protocol Data Unit (PPDU), Medium Access Control Layer Protocol Data Unit (MPDU), Aggregated MPDU (A-MPDU)). The PPDU transmitted by STA 1-1 411 may include at least one MPDU or A-MPDU.

STA 1-1 411 may transmit UL PPDU 420 as a first frame of TXOP. STA MLD 1 may establish a BA session with AP MLD 1 for each TID. That is, the BA session may be established for each MLD. For example, STA 1-1 411 may establish a BA session corresponding to a specific TID with AP 1-1 401 on the first link, and STA 1-1 411 of STA MLD 1 may act as an originator and AP 1-1 401 of AP MLD 1 may act as a recipient. AP 1-1 401 may record the SN of the MPDU or/and MSDU included in the received UL PPDU 420 in a Scoreboard and store the received frame in a reorder buffer. If AP 1-1 401 does not correctly receive UL PPDU 420, a specific SN may be missing in the scoreboard, and the MSDU corresponding to the next SN of the missing SN may not be forwarded to the upper layer. AP 1-1 401 may request recovery of the missing MPDU or/and MSDU from STA 1-1 411. Recovery of MPDU or/and MSDU may have a priority. AP 1-1 401 may request STA 1-1 411 to recover the missing MPDU or/and MSDU with priority. For example, AP 1-1 401 may request recovery of the missing MPDU or/and MSDU based on the priority of TID. Here, TID is mapped to AC, and in this case, the priority of TID is the priority of AC. Alternatively, AP 1-1 401 may request that missing MPDUs or/and MSDUs be recovered based on the priority of the frame according to Delay Bound information.

When identifying the missing MPDU or/and MSDU, the AP MLD may perform a channel access operation (e.g., an EDCA backoff operation) on a link (e.g., a second link) other than the first link on which the UL PPDU 420 is being transmitted. The channel access operation may include a backoff operation. According to one embodiment of the present disclosure, initiating the backoff operation may be initiating a channel access operation. That is, the backoff operation may be initiated on the second link as soon as an error is identified on the first link. Alternatively, the backoff operation may be initiated on the second link when frame transmission is initiated on the first link. When the backoff operation is completed on the second link (e.g., when the backoff count reaches 0) and STA 1-1 411 has finished transmission on the first link and is in a receiving state, i.e., when reception is also possible on the second link, AP 1-2 403 may transmit to STA 1-2 413a frame (e.g., a Trigger Frame (TF) 440) indicating transmission of a frame in which an error has occurred among the frames transmitted by STA 1-1 411. The frame 440 indicating transmission of the frame in which an error has occurred may be transmitted at the same time as a BA frame 430 transmitted on the first link, and may indicate resources (e.g., uplink transmission time) that may transmit a frame in which an error has occurred, and may indicate information (e.g., an association identifier (AID)) that may specify STA MLD 1. The AID of STA MLD 1 is the same for STA 1-1 411 and STA 1-2 413. At the time when the backoff operation is completed, if STA 1-1 411 is transmitting on the first link, AP 1-2 403 may keep the backoff counter at 0 and wait without transmitting a frame. AP 1-2 403 may transmit the frame 440 indicating transmission of the frame in which the error has occurred when it is expected that STA 1-1 411 has terminated transmission on the first link and is waiting to receive. An MSDU to be transmitted to an STA MLD having an AID different from the AID of STA MLD 1 may be generated or input in the EDCAF associated with the AC (Access Category) with the backoff counter at 0. That is, an MSDU whose destination is a STA MLD or another STA other than STA MLD 1 and STAs affiliated with STA MLD 1 may be generated or input. AP MLD 1 may consider the buffer of AC with the backoff counter at 0 as empty until the transmission of the frame in which the error has occurred is completed, and may delay the transmission of the generated MSDU. Alternatively, even if the backoff operation is completed when 'STA 1-1 411 is transmitting on the first link,' a new backoff operation may be performed again until STA 1-1 411 terminates the transmission on the first link. AP 1-1 401 may transmit the BA frame 430 after a certain period of time (e.g., SIFS time) from the transmission end time of the UL PPDU 420 transmitted by STA 1-1 411. The AP MLD may transmit a frame (e.g., a trigger frame (TF) 440) indicating transmission of the frame in which the error has occurred on a second link other than the first link on which the BA frame 430 is transmitted, at the same time as transmitting the BA frame 430. Alternatively, the transmission start time of the BA frame of AP 1-1 401 and AP 1-2 403 of AP MLD 1 and the transmission start time of the frame 440 indicating transmission of the frame in which the error has occurred may be different. The frame 440 indicating transmission of the frame in which the error has occurred may be padded to align the transmission end time with the BA frame 430 in order to transmit the frame in which the error has occurred simultaneously with transmission of the first link, or the transmission start time may be adjusted so that the transmission end time of the frame 440 indicating transmission of the frame in which the error has occurred may coincide with the end time of the BA frame 430 transmitted by STA 1-1 411 on the first link. The BA frame 430 may be padded for simultaneous transmission of subsequent frames to match the transmission end time with the frame 440 indicating the transmission of the frame in which the error has occurred. Padding includes a padding field and a padding bit. Padding may be performed in a MAC frame or a PHY PPDU. The frame 440 indicating the transmission of the frame in which the error has occurred may include TID information of an MPDU or/and MSDU that was not correctly received in various forms such as fields, subfields, and indication bits. Padding is a frame for extending the transmission end time of a frame.

AP 1-2 403 of AP MLD may transmit a control frame (e.g., a trigger frame) on the second link to obtain a new TXOP for rapid recovery of a missing MPDU or/and MSDU when the original TXOP of STA 1-1 411 obtained through the initially transmitted UL PPDU 420 is expected to end with the transmission of the BA frame 430 (e.g., when the original TXOP of STA 1-1 411 is expected to end soon). The control frame transmitted by AP MLD includes an indicator (e.g., an indicator of at least one of a field, a subfield, an information element, and an indicator bit) indicating recovery of a missing MPDU or/and MSDU. The AP MLD may indicate (e.g., trigger) transmission of a UL PPDU including retransmission data (e.g., recovered MPDU or/and MSDU) 450 for retransmitting the frame in which the error has occurred in a newly acquired new TXOP, and the transmission of the UL PPDU may be transmitted on a different link (e.g., a second link) from the initially transmitted UL PPDU. The AP MLD, which has received the UL PPDU including the retransmission data 450, may transmit a BA frame after a certain period of time (e.g., SIFS time) from the transmission end time of the UL PPDU frame including the retransmission data 450. When receiving the recovered MPDU or/and MSDU, the AP MLD may reorder the MPDUs or/and MSDUs waiting in the reorder buffer and forward them to the upper layer.

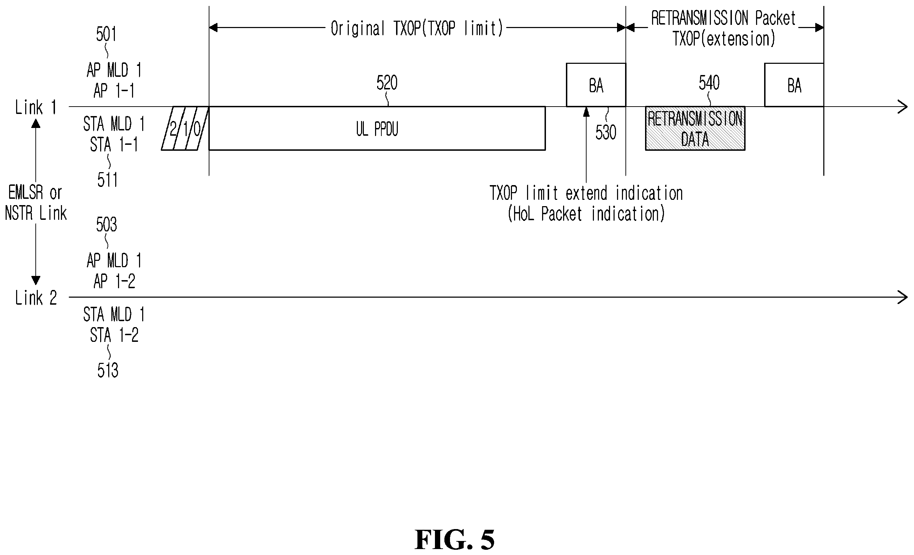

FIG. 5 illustrates a third embodiment of a rapid error recovery method.

Referring to FIG. 5, AP 1-1 501 and AP 1-2 503 affiliated with AP MLD 1 may operate, and AP 1-1 501 may operate in a first link, and AP 1-2 503 may operate in a second link. STA 1-1 511 and STA 1-2 513 affiliated with STA MLD 1 may operate, and STA 1-1 511 may operate in a first link, and STA 1-2 513 may operate in a second link. The first link and the second link may be an Enhanced Multi-Link Single Radio (EMLSR) link performing EMLSR operation or/and a Non-Simultaneous Transmit and Receive (NSTR) link pair. STA 1-1 511 may perform a channel access operation (e.g., EDCA backoff operation) to acquire a TXOP. Within the TXOP acquired by STA 1-1 511, STA 1-1 511 may transmit at least one frame (e.g., PPDU (Physical Layer Protocol Data Unit), MPDU (Medium Access Control Layer Protocol Data Unit), A-MPDU (Aggregated MPDU)). The PPDU transmitted by STA 1-1 511 may include at least one MPDU or A-MPDU.

STA 1-1 511 may transmit UL PPDU 520 as a first frame of TXOP. STA MLD 1 may establish a BA session with AP MLD 1 for each TID. That is, the BA session may be established for each MLD. For example, STA 1-1 511 may establish a BA session corresponding to a specific TID with AP 1-1 501 on the first link, and STA 1-1 511 of STA MLD 1 may act as an originator and AP 1-1 501 of AP MLD 1 may act as a recipient. AP 1-1 501 may record the SN of the MPDU or/and MSDU included in the received UL PPDU 520 in a scoreboard and store the received frame in a reorder buffer. If AP 1-1 501 does not correctly receive UL PPDU 520, a specific SN may be missing in the scoreboard, and the MSDU corresponding to the next SN of the missing SN may not be forwarded to the upper layer. AP 1-1 501 may request recovery of the missing MPDU or/and MSDU from STA 1-1 511. Recovery of MPDU or/and MSDU may have a priority. AP 1-1 501 may request STA 1-1 511 to recover the missing MPDU or/and MSDU with priority. For example, AP 1-1 501 may request recovery of the missing MPDU or/and MSDU based on the priority of TID. Here, TID is mapped to AC, and in this case, the priority of TID is the priority of AC. Alternatively, AP 1-1 501 may request that missing MPDUs or/and MSDUs be recovered based on the priority of the frame according to Delay Bound information.

AP 1-1 501 may transmit a BA frame 530 after a certain period of time (e.g., SIFS time) from the transmission end time of a UL PPDU 520 transmitted by STA 1-1 511. AP 1-1 501 may transmit an indicator to cause STA 1-1 511, which is a TXOP holder, to extend the TXOP limit in order to retransmit missing MPDU or/and MSDU. In a specific embodiment, AP 1-1 501 may include the indicator in the BA frame 530 in the form of a field, a subfield, or an information element. In another embodiment, AP 1-1 501 may configure the indicator as a separate MPDU and transmit it to STA 1-1 511 in the form of an MPDU or A-MPDU including the BA frame 530. In another embodiment, AP 1-1 501 may include the indicator in a QoS frame (e.g., a QoS Null frame and a QoS Data frame) or an Action frame. The QoS frame or the Action frame may be a QoS frame that does not request an immediate response (e.g., a frame with an Ack policy set to No Ack) or an Action No Ack frame. STA 1-1 511 may use an extended TXOP according to the TXOP limit extension indicator in the BA frame sent by AP 1-1 501. STA MLD 1 may be an EMLSR MLD, and STA 1-1 511 and STA 1-2 513 may perform EMLSR operations. STA 1-1 511 may extend the TXOP when it receives the BA frame 530 including a TXOP extension indicator. STA 1-1 511 may transmit a frame within the extended TXOP without returning to the listening operation during the EMLSR operation using the extended TXOP. The listening operation is a state in which the STA MLD may only receive an initial control frame. The initial control frame includes an MU-RTS trigger frame and a BSRP (buffer status report poll) trigger frame. Since STA 1-1 511 performs communication using an extended TXOP without returning to the listening operation, there is no need to perform additional channel access procedures (e.g., EDCA backoff operation and EMLSR initial control frame transmission procedure), and since a transition delay that occurs during EMLSR operation (e.g., EMLSR transition delay that occurs when transitioning to the listening operation) does not occur, additional delay can be prevented. STA 1-1 511 may transmit a UL PPDU including retransmission data 540 to AP 1-1 501 on the first link on which the initial UL PPDU was transmitted. AP 1-1 501 that has received the UL PPDU including retransmission data 540 may transmit a BA frame after a certain period of time (e.g., SIFS time) from the transmission end time of the UL PPDU. When receiving the recovered MPDUs or/and MSDUs, the AP MLD may reorder the MPDUs or/and MSDUs waiting in the reorder buffer and forward them to the upper layer.

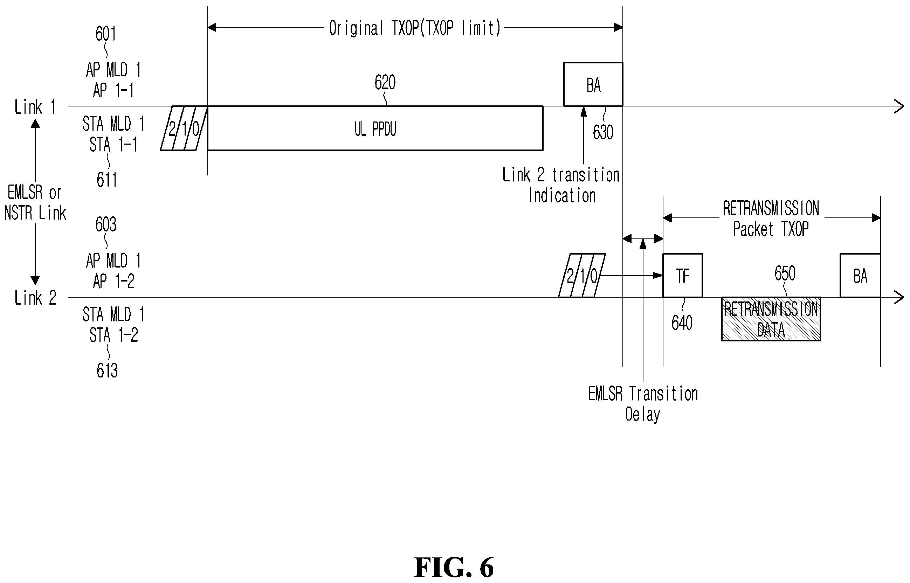

FIG. 6 illustrates a fourth embodiment of a rapid error recovery method.

Referring to FIG. 6, AP 1-1 601 and AP 1-2 603 affiliated with AP MLD 1 may operate, and AP 1-1 601 may operate in a first link, and AP 1-2 603 may operate in a second link. STA 1-1 611 and STA 1-2 613 affiliated with STA MLD 1 may operate, and STA 1-1 611 may operate in a first link, and STA 1-2 613 may operate in a second link. The first link and the second link may be an Enhanced Multi-Link Single Radio (EMLSR) link performing EMLSR operation or/and a Non-Simultaneous Transmit and Receive (NSTR) link pair. STA 1-1 611 may perform a channel access operation (e.g., EDCA backoff operation) to acquire a TXOP. Within the TXOP acquired by STA 1-1 611, STA 1-1 611 may transmit at least one frame (e.g., Physical Layer Protocol Data Unit (PPDU), Medium Access Control Layer Protocol Data Unit (MPDU), Aggregated MPDU (A-MPDU)). The PPDU transmitted by STA 1-1 611 may include at least one MPDU or A-MPDU.

STA 1-1 611 may transmit UL PPDU 620 as a first frame of TXOP. STA MLD 1 may establish a BA session with AP MLD 1 for each TID. That is, a BA session may be established for each MLD. For example, STA 1-1 611 may establish a BA session corresponding to a specific TID with AP 1-1 601 on the first link, and STA 1-1 611 of STA MLD 1 may act as an originator and AP 1-1 601 of AP MLD 1 may act as a recipient. AP 1-1 601 may record the SN of the MPDU or/and MSDU included in the received UL PPDU 620 in a scoreboard and store the received frame in a reorder buffer. If AP 1-1 601 does not correctly receive UL PPDU 620, a specific SN may be missing in the scoreboard, and the MSDU corresponding to the next SN of the missing SN may not be forwarded to the upper layer. AP 1-1 601 may request recovery of the missing MPDU or/and MSDU from STA 1-1 611. Recovery of MPDU or/and MSDU may have a priority. AP 1-1 601 may request STA 1-1 611 to recover the missing MPDU or/and MSDU with priority. For example, AP 1-1 601 may request recovery of the missing MPDU or/and MSDU based on the priority of TID. Here, TID is mapped to AC, and in this case, the priority of TID is the priority of AC. Alternatively, AP 1-1 601 may request that missing MPDUs or/and MSDUs be recovered based on the priority of the frame according to Delay Bound information.

AP 1-1 601 may transmit a BA frame after a certain period of time (e.g., SIFS time) from the transmission end time of the UL PPDU transmitted by STA 1-1 611. If the initially transmitted UL PPDU 620 is not correctly received, AP 1-1 601 may include an indicator, which indicates that STA MLD 1 performs a normal transmission/reception operation (e.g., operation for retransmitting a frame in which an error has occurred) on the second link in order to recover the frame in which the error has occurred, in the BA frame 630 in the form of a field, subfield, or information element. STA MLD 1, which has received the frame including the indicator indicating that a normal transmission/reception operation (e.g., an operation for retransmitting the frame in which the error has occurred) is performed on the second link, may perform the normal transmission/reception operation (e.g., the operation for retransmitting the frame in which the error has occurred) on the second link after the EMLSR Transition Delay time from immediately after receiving the frame including the indicator. AP 1-2 603 may perform a backoff operation in advance to trigger transmission of a UL PPDU including retransmission data 650 on the second link, and may wait until a time (e.g., after the EMLSR Transition Delay time from the transmission completion time of the frame including the indicator of AP 1-1 601) at which STA 1-2 613 is expected to perform the normal transmission/reception operation (e.g., the operation for retransmitting the frame in which the error has occurred) in a state in which the backoff counter reaches 0. Alternatively, AP 1-2 603 may repeat the backoff operation until a time (e.g., after the EMLSR Transition Delay time from the transmission completion time of the frame including the indicator of AP 1-1 601) at which STA 1-2 613 is expected to perform the normal transmission/reception operation (e.g., the operation for retransmitting the frame in which the error has occurred). AP 1-2 603 may wait for transmission of a trigger frame 640 on the second link until after the EMLSR Transition Delay time from the transmission completion time of the BA frame 630 on the first link. AP 1-2 603 may trigger a UL PPDU including the retransmission data 650 by transmitting a trigger frame to STA 1-2 613 after the EMLSR Transition Delay time from the transmission completion time of the BA frame 630 on the first link. STA 1-2 613 may transmit retransmission data 650 indicated by the trigger frame 640 to AP 1-2 603. AP 1-2 603 may transmit a BA frame after a certain period of time (e.g., SIFS time) from the transmission end time of the UL PPDU including the retransmission data 650 transmitted by STA 1-2 613. When receiving recovered MPDUs or/and MSDUs, the AP MLD may reorder the MPDUs or/and MSDUs waiting in the reorder buffer and forward them to the upper layer.

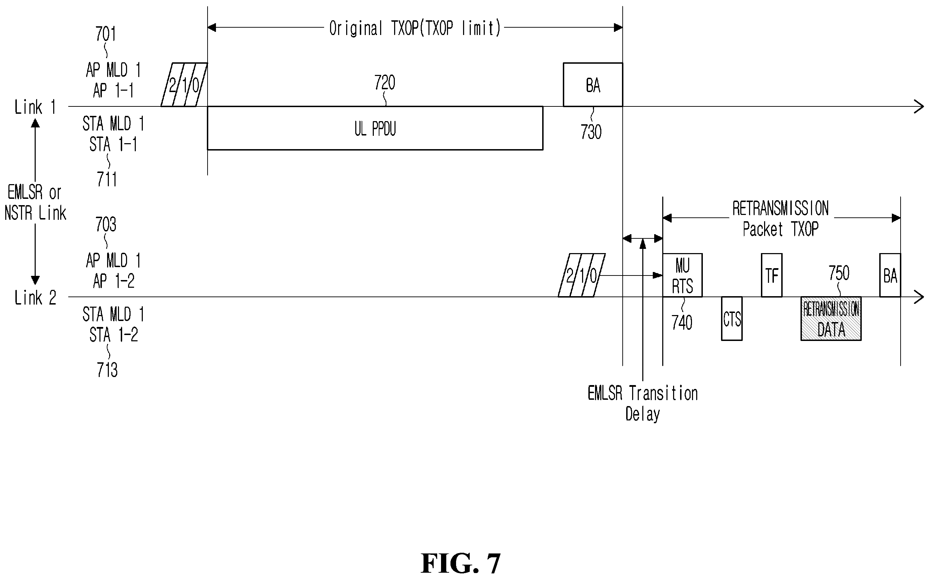

FIG. 7 illustrates a fifth embodiment of a rapid error recovery method.

Referring to FIG. 7, AP 1-1 701 and AP 1-2 703 affiliated with AP MLD 1 may operate, and AP 1-1 701 may operate in a first link, and AP 1-2 703 may operate in a second link. STA 1-1 711 and STA 1-2 713 affiliated with STA MLD 1 may operate, and STA 1-1 711 may operate in a first link, and STA 1-2 713 may operate in a second link. The first link and the second link may be an Enhanced Multi-Link Single Radio (EMLSR) link performing EMLSR operation or/and a Non-Simultaneous Transmit and Receive (NSTR) link pair. STA 1-1 711 may perform a channel access operation (e.g., EDCA backoff operation) to acquire a TXOP. Within the TXOP acquired by STA 1-1 711, STA 1-1 711 may transmit at least one frame (e.g., Physical Layer Protocol Data Unit (PPDU), Medium Access Control Layer Protocol Data Unit (MPDU), Aggregated MPDU (A-MPDU)). The PPDU transmitted by STA 1-1 711 may include at least one MPDU or A-MPDU.

STA 1-1 711 may transmit UL PPDU 720 as a first frame of TXOP. STA MLD 1 may establish a BA session with AP MLD 1 for each TID. That is, the BA session may be established for each MLD. For example, STA 1-1 711 may establish a BA session corresponding to a specific TID with AP 1-1 701 on the first link, and STA 1-1 711 of STA MLD 1 may act as an originator and AP 1-1 701 of AP MLD 1 may act as a recipient. AP 1-1 701 may record the SN of the MPDU or/and MSDU included in the received UL PPDU 720 in a scoreboard and store the received frame in a reorder buffer. If AP 1-1 701 does not correctly receive UL PPDU 720, a specific SN may be missing in the scoreboard, and the MSDU corresponding to the next SN of the missing SN may not be forwarded to the upper layer. AP 1-1 701 may request recovery of the missing MPDU or/and MSDU from STA 1-1 711. Recovery of MPDU or/and MSDU may have a priority. AP 1-1 701 may request STA 1-1 711 to recover the missing MPDU or/and MSDU with priority. For example, AP 1-1 701 may request recovery of the missing MPDU or/and MSDU based on the priority of TID. Here, TID is mapped to AC, and in this case, the priority of TID is the priority of AC. Alternatively, AP 1-1 701 may request that missing MPDUs or/and MSDUs be recovered based on the priority of the frame according to Delay Bound information.

AP 1-1 701 may transmit a BA frame 730 after a certain period of time (e.g., SIFS time) from the transmission end time of UL PPDU 720 transmitted by STA 1-1 711. STA MLD 1 may switch STA 1-1 711 of the first link and STA 1-2 713 of the second link to EMLSR Listening Operation after the EMLSR Transition Delay time, and may wait for reception of an initial control frame on the first link or/and the second link. The initial control frame is an MU-RTS trigger frame 750 or a BSRP trigger frame.

AP 1-2 703 may perform a backoff operation in advance before a time point at which STA 1-2 713 is expected to operate in a listening operation (e.g., after the EMLSR Transition Delay time from the transmission completion time of the BA frame 730 of AP 1-1 701) to trigger transmission of a UL PPDU including retransmission data 750 on the second link, and may wait in a state in which the backoff counter reaches 0. Alternatively, AP 1-2 703 may repeatedly perform a backoff until a time point at which STA 1-2 713 is expected to operate in a listening operation (e.g., after the EMLSR Transition Delay time from the transmission completion time of the BA frame 730 of AP 1-1 701). AP 1-2 703 may wait for transmission of an MU-RTS trigger frame 740 until after the EMLSR Transition Delay time from the transmission end time of the BA frame 730 on the first link. AP 1-2 703 may transmit the MU-RTS frame 740 to STA 1-2 713 (i.e., transmit an initial control frame) after the EMLSR Transition Delay time from the transmission end time of the BA frame 730 on the first link, so that STA MLD 1 may perform the normal transmission/reception operation (e.g., the operation for retransmitting the frame in which the error has occurred) on the second link. STA 1-2 713 may transmit a CTS frame after a certain period of time (e.g., SIFS time) from the transmission end time of the MU-RTS frame 740. AP 1-2 703 may trigger a UL PPDU including retransmission data 750 by transmitting a trigger frame to STA 1-2 713. STA 1-2 713 may transmit retransmission data 750 indicated by the trigger frame 740 to AP 1-2 703. AP 1-2 703 may transmit a BA frame after a certain period of time (e.g., SIFS time) from the transmission end time of the UL PPDU including retransmission data 740 transmitted by STA 1-2 713. When receiving the recovered MPDUs or/and MSDUs, the AP MLD may sequentially reorder the MPDUs or/and MSDUs waiting in the reorder buffer and forward it to the upper layer.

Hereinafter, embodiments of an error recovery procedure will be described. The error recovery procedure is performed by an STA and an AP. The STA and AP may be MLDs. In other words, the STA and AP may perform communication using multiple links. For example, the STA and AP may perform communication using a first link and a second link. Here, the first link and the second link may be a NSTR link pair. In other words, the STA and AP cannot simultaneously perform transmission and reception on the first link and the second link.

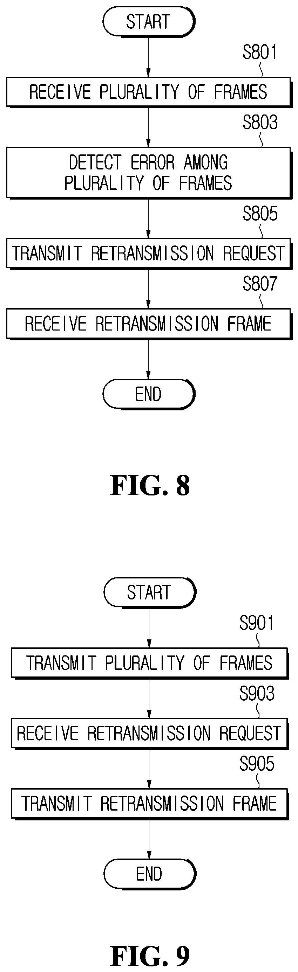

FIG. 8 illustrates a flowchart of an error recovery procedure according to one embodiment of the present disclosure. FIG. 8 illustrates a procedure performed by an AP (e.g., AP MLD of FIG. 3).

Referring to FIG. 8, in step S801, the AP receives a plurality of frames. The AP may receive a plurality of frames (e.g., UL PPDU 1 320 of FIG. 3) using the first link. The plurality of frames may include at least one Physical Layer Protocol Data Unit (PPDU), Medium Access Control Layer Protocol Data Unit (MPDU), or Aggregated MPDU (A-MPDU). For example, the plurality of frames may be grouped and received as a single PPDU. The plurality of frames may include at least one of a sequence number (SN) or a traffic identifier (TID). Each of the frames may have the same TID, or alternatively, may have different TIDs. For example, at least some of the frames may have the same TID. At least some of the frames may have different TIDs. Each of the frames may have a priority for recovery. For example, each frame may have a priority based on TID, and a frame with a higher priority may be recovered or retransmitted first when an error is detected. The AP records the plurality of received frames in a reorder buffer and performs reordering based on the SN, etc.

In step S803, the AP detects errors among the plurality of frames. Errors include a case where a received frame is not decoded. The AP may detect errors based on the received frames. For example, the AP may detect errors based on the TID or SN included in the received frame. For example, in the reordering procedure, the AP may recognize that a frame including a missing SN was not properly received and detect the error.

In step S805, the AP transmits a retransmission request. The AP may transmit a retransmission request to request retransmission of a frame in which an error has been detected. The retransmission request may be transmitted on the first link or the second link. The retransmission request may be transmitted in a trigger frame (e.g., the trigger frame 340 of FIG. 3), a response frame (e.g., the BA frame 530 of FIG. 5), or an MU-RTS frame (e.g., the MU-RTS trigger frame 740 of FIG. 7). When the retransmission request is transmitted on the second link, the transmission of the frame including the retransmission request may be completed (or terminated) at the same time as the response frame transmitted on the first link. To complete the transmission at the same time, the frame including the retransmission request may include padding. Alternatively, the response frame transmitted on the first link may include padding to complete the transmission at the same time. The retransmission request may include at least one of the TID of the frame in which the error has been detected, SN of the frame in which the error has been detected, the resource used for retransmission of the frame in which the error has been detected, or the AID of the STA retransmitting the frame. To transmit the retransmission request, the AP may perform a channel access procedure. For example, the channel access procedure may be performed from the time when an error in the frame is detected. After the channel access procedure is completed, the AP may wait without transmitting the retransmission request. For example, the AP may transmit the retransmission request after the STA completes transmission of the plurality of frames. As another example, the AP may transmit the retransmission request after the STA transmits the frames and then switches to the EMLSR listening mode. To transmit the retransmission request, the AP may acquire a TXOP on the second link.

In step S807, the AP receives a retransmission frame (e.g., retransmission data 350 of FIG. 3). The retransmission frame includes the frame in which an error has been detected. For example, the retransmission frame may include the frame in which the error has been detected and a frame transmitted after the frame in which the error has been detected. The retransmission frame may be received using the first link or the second link. The retransmission frame may be received using the first link or the second link depending on the type of frame including the retransmission request. For example, if the retransmission request is included in a trigger frame transmitted on the second link or an MU-RTS frame transmitted on the second link, the retransmission frame may be received using the second link. As another example, if the retransmission request is included in a response frame transmitted on the first link, the retransmission frame may be received using the first link.

FIG. 9 illustrates a flowchart of an error recovery procedure according to one embodiment of the present disclosure. FIG. 9 illustrates a procedure performed by an STA (e.g., STA MLD of FIG. 3).

Referring to FIG. 9, in step S901, an STA transmits a plurality of frames (e.g., UL PPDU 1 320 of FIG. 3). The STA may transmit the plurality of frames using the first link. To transmit the plurality of frames, the STA may acquire a transmit opportunity (TXOP). The plurality of frames include at least one Physical Layer Protocol Data Unit (PPDU), Medium Access Control Layer Protocol Data Unit (MPDU), or Aggregated MPDU (A-MPDU). For example, the plurality of frames may be grouped and transmitted as a single PPDU. The plurality of frames may include at least one of a sequence number (SN) or a traffic identifier (TID). Each of the frames may have the same TID, or alternatively, may have different TIDs. For example, at least some of the frames may have the same TID. At least some of the frames may have different TIDs. Each of the frames may have a priority for recovery. For example, each frame may have a priority based on TID, and a frame with a higher priority may be recovered or retransmitted first when an error is detected. The plurality of frames may be transmitted in SN order, or alternatively, they may be transmitted regardless of SN order.

In step S903, the STA receives a retransmission request. The retransmission request may be received on the first link or the second link. The retransmission request may be received in a trigger frame (e.g., the trigger frame 340 of FIG. 3), a response frame (e.g., the BA frame 530 of FIG. 5), or an MU-RTS frame (e.g., the MU-RTS trigger frame 740 of FIG. 7). If the retransmission request is received on the second link, reception of the frame including the retransmission request may be completed at the same time as the response frame received on the first link. To complete reception at the same time, the frame including the retransmission request may include padding. The retransmission request may include at least one of the TID of the frame in which the error has been detected, the SN, the resource used for retransmission of the frame in which the error has been detected, or the AID of the STA retransmitting the frame. The STA may receive the retransmission request after transmission of the plurality of frames is completed. As another example, the STA may receive the retransmission request after transmitting frames and then switching to EMLSR listening mode. The retransmission request may include an indicator for extending the STA's TXOP. If the retransmission request includes the indicator for extending the TXOP, the STA may extend the TXOP to transmit the retransmission frame.

In step S905, the STA transmits a retransmission frame (e.g., retransmission data 350 of FIG. 3). The retransmission frame includes the frame in which the error has been detected. For example, the retransmission frame may include the frame in which the error has been detected and a frame transmitted after the frame in which the error has been detected. The retransmission frame may be transmitted using the first link or the second link. The retransmission frame may be transmitted using the first link or the second link depending on the type of frame that includes the retransmission request. For example, if the retransmission request is included in a trigger frame transmitted on the second link or an MU-RTS frame transmitted on the second link, the retransmission frame may be transmitted using the second link. As another example, if the retransmission request is included in a response frame transmitted on the first link, the retransmission frame may be transmitted using the first link. To transmit the retransmission data, the STA may acquire a TXOP. The STA may acquire a TXOP on the link through which the retransmission frame is transmitted.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

### Industrial Applicability

The present disclosure may be applied to devices and recording media in a wireless LAN system.

## Claims

1. A method for operating an access point (AP) in a wireless LAN system, comprising:
receiving a plurality of frames from a station (STA);
detecting an error in at least one of the plurality of frames;
transmitting a retransmission request based on a frame in which the error has been detected; and
receiving a retransmission frame based on the retransmission request,
wherein the retransmission frame includes the frame in which the error has been detected, and
wherein the retransmission frame is received on a link on which the retransmission request was transmitted.

2. The method of claim 1, wherein the retransmission request includes at least one of a TID of the frame in which the error has been detected, an SN of the frame in which the error has been detected, a resource used to transmit the retransmission frame, or an AID of the STA.

3. The method of claim 1, wherein the retransmission request is transmitted using a response frame, a trigger frame or an MU-RTS frame.

4. The method of claim 3, wherein when the retransmission request is transmitted using the trigger frame, transmission of the trigger frame is completed at the same time as the response frame.

5. The method of claim 4, wherein the trigger frame includes padding for completing transmission at the same time as the response frame.

6. The method of claim 1, further comprising performing a channel access procedure for transmitting the retransmission request,
wherein the retransmission request is transmitted after the channel access procedure and reception of the plurality of frames are completed.

7. The method of claim 6, wherein the retransmission request is transmitted after a time for the STA to switch to a listening mode has elapsed.

8. The method of claim 1,
wherein each of the plurality of frames includes a priority, and
wherein the retransmission frame is received based on the priority.

9. A method for operating a STA (station) in a wireless LAN system, comprising:
transmitting a plurality of frames to an access point (AP);
receiving a retransmission request based on a frame in which an error has been detected among the plurality of frames; and
transmitting a retransmission frame based on the retransmission request,
wherein the retransmission frame includes the frame in which the error has been detected, and
wherein the retransmission frame is transmitted on a link on which the retransmission request was received.

10. The method of claim 9, wherein the retransmission request includes at least one of a TID of the frame in which the error has been detected, an SN of the frame in which the error has been detected, a resource used to transmit the retransmission frame, or an AID of the STA.

11. The method of claim 9, wherein the retransmission request is received using a response frame, a trigger frame or an MU-RTS frame.

12. The method of claim 11, wherein when the retransmission request is received using the trigger frame, reception of the trigger frame is completed at the same time as the response frame.

13. The method of claim 12, wherein the trigger frame or the response frame includes padding for completing reception at the same time as the response frame or the trigger frame.

14. The method of claim 9, wherein the retransmission request is received after transmission of the plurality of frames is completed.

15. The method of claim 14, further comprising switching to a listening mode after a response frame to the plurality of frames is received,
wherein the retransmission request is received after a time for switching to the listening mode has elapsed.

16. The method of claim 9,
wherein each of the plurality of frames includes a priority, and
wherein the retransmission frame is transmitted based on the priority.

17. An access point (AP) in a wireless LAN system, comprising:
a transceiver; and
a processor connected to the transceiver,
wherein the processor is configured to:
receive a plurality of frames from a station (STA);
detect an error in at least one of the plurality of frames;
transmit a retransmission request based on a frame in which the error has been detected; and
receive a retransmission frame based on the retransmission request,
wherein the retransmission frame includes the frame in which the error has been detected, and
wherein the retransmission frame is received on a link on which the retransmission request was transmitted.

18. A station (STA) in a wireless LAN system, comprising:
a transceiver; and
a processor connected to the transceiver,
wherein the processor is configured to:
transmit a plurality of frames to an access point (AP);
receive a retransmission request based on a frame in which an error has been detected among the plurality of frames; and
transmit a retransmission frame based on the retransmission request,
wherein the retransmission frame includes the frame in which the error has been detected, and
wherein the retransmission frame is transmitted on a link on which the retransmission request was received.
